# EUROPÄISCHE PATENTSCHRIFT

(11) **EP 2 504 831 B1**
(45) Veröffentlichungstag und Bekanntmachung des Hinweises auf die Patenterteilung: **10.06.2015**
(21) Anmeldenummer: 11704034.5
(22) Anmeldetag: 27.01.2011
(51) Int. Cl.: G10K 11/165

(54) **DÄMPFUNGSMASSE FÜR ULTRASCHALLSENSOR, VERWENDUNG EINES EPOXIDHARZES**
ATTENUATING MASS FOR AN ULTRASONIC SENSOR, USE OF AN EPOXY RESIN
MATIÈRE D'AMORTISSEMENT POUR DÉTECTEUR À ULTRASONS, UTILISATION D'UNE RÉSINE ÉPOXY

(30) Priorität: 09.04.2010 DE 102010014319; 29.01.2010 DE 102010006216
(43) Veröffentlichungstag der Anmeldung: 03.10.2012
(73) Patentinhaber: Continental Automotive GmbH, 30165 Hannover (DE)
(72) Erfinder: FISCHER, Walter, 84453 Mühldorf am Inn (DE); MUHRER, Volker, 90768 Fürth (DE); PFEIFFER, Karl-Friedrich, 91058 Erlangen (DE); ROTH, Manfred, 90613 Großhabersdorf (DE)
(86) Internationale Anmeldenummer: PCT/EP2011/051146
(87) Internationale Veröffentlichungsnummer: WO 2011/092245

(56) Entgegenhaltungen:
- DE-C1- 19 756 577
- US-A- 4 381 470
- US-B1- 6 467 138

## Beschreibung

Die Erfindung betrifft eine Dämpfungsmasse für einen Ultraschallsensor nach dem Oberbegriff des Anspruchs 1 und die Verwendung der Dämpfungsmasse.

Für die Füllstandsmessung in Fluiden gibt es vielerlei Messmethoden, die alle spezifische Vor- und Nachteile haben. Eine robuste und vielseitige Messmethode ist die Messung per Ultraschall, bei der die Laufzeit eines Ultraschallpulses vom Sender zu einer Grenzfläche (z.B. der Grenzfläche Fluid - Luft) und zurück zu einem Empfänger gemessen wird und aus der bekannten oder aktuell ermittelten Schallgeschwindigkeit im Medium die Laufstrecke errechnet wird.

In vielen Fällen dient das gleiche Ultraschall erzeugende Element, meist ein piezoelektrischer Wandler, sowohl als Sender als auch als Empfänger. Die mit einem solchen Sensor minimal messbare Strecke (auch Blockdistanz genannt) wird dadurch bestimmt, wie schnell das Sende- und Empfangselement nach Aussenden des Messpulses wieder zur Ruhe gekommen ist, so dass das Echosignal sauber detektiert werden kann.

Diese Ausklingzeit wird von zwei Hauptfaktoren beeinflusst: zum einen von der akustische Kopplung ans Messmedium, zum anderen von der mechanischen Dämpfung des Elements. Eine gute Kopplung ans Medium verkürzt die Ausklingzeit dadurch, dass ein Großteil der Schallenergie abgestrahlt werden kann und nicht im Sendeelement durch innere Reibung oder andere Verlustmechanismen dissipiert werden muss. Eine mechanische Dämpfung des Elements vernichtet oder zerstreut die Restenergie im Dämpfungsmaterial, so dass das Element selbst schneller zur Ruhe kommt. Dabei ist zu beachten, dass eine übermäßige mechanische Dämpfung auch die Signalamplitude und die Empfindlichkeit der Schalldetektion negativ beeinflussen kann.

Beim Einsatz in Fahrzeugen, speziell bei der Messung des Ölstands in der Ölwanne eines Verbrennungsmotors, wird meist gefordert, die Blockdistanz und damit den minimal detektierbaren Öllevel möglichst gering zu halten. Dazu ist es notwendig, das Ausklingen des Sende- und Empfangselements stark zu dämpfen, wobei diese Dämpfung über einen sehr weiten Temperaturbereich funktionieren muss.

Bedingt durch das zum Einsatz gebrachte Impuls-Echoverfahren entstehen, insbesondere bei ungenügender Dämpfung, störende Signale, die aus einer Reflexion an der Rückseite des Sensors entstehen. Zur Unterdrückung dieser unerwünschten Signale wird die Rückseite der Ultraschallquelle mit einer Dämpfungsmasse versehen. Hierbei kommen Vergussmassen zum Einsatz die in das Kunststoffgehäuse eingefüllt werden.

Aus der DE 3431741 A1 ist eine Vorrichtung und ein Verfahren zur Messung des Füllstandes von Flüssigkeiten bekannt, wobei in geschlossenen Behältern ein außen angebrachter Ultraschallsensor flächig über einem Medium mit dem planen oder gewölbten Behälterboden verkoppelt ist. Als Medium dient vorzugsweise ein Epoxidharzkleber.

Aus der Druckschrift US6467138B1 geht ein Verfahren zur Herstellung einer mehrschichtig gestapelten Ultraschallwandler-Anordnung hervor, bei der ein dämpfendes Deckmaterial (Backing Block) beispielsweise aus flexiblem Epoxydharz gefertigt ist. In das dämpfende Deckmaterial wird ein Füllstoff bestehend aus mineralischen oder metallischen Partikeln eingebracht. Gemäß einer Ausführungsform ist vorgesehen, metallische Partikel im Deckmaterial so einzubringen, dass diese sich an einer Seite ansammeln, um einen einer Verbesserung der Bandbreite des Ultraschallwandlers dienenden Impedanzgradienten zu bilden.

Bislang sind aber noch keine Vergussmassen bekannt, die über einen geforderten Temperaturbereich von -40°C bis 180°C die erforderliche Ultraschalldämpfung zeigen.

Aufgabe der vorliegenden Erfindung ist es daher, eine Vergussmasse zur Dämpfung von Ultraschallsensoren im Temperaturbereich von -30 bis 150°C anzugeben.

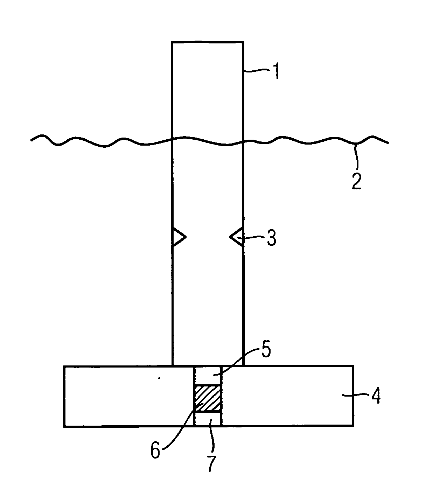

Die Lösung der Aufgabe wird durch die in der vorliegenden Beschreibung, der Figur und den Ansprüchen offenbarte Erfindung angegeben.

Entsprechend ist Gegenstand der Erfindung eine Dämpfungsmasse, die in einem Temperaturintervall von -30°C bis 150°C weich und stabil ist, umfassend ein Epoxidharz und einen Füllstoff, wobei der Füllstoff in einer multimodalen Korngrößenverteilung vorliegt, so dass ein Dichtegradient der Partikel in der Harzmatrix vorliegt. Zudem ist Gegenstand der Erfindung die Verwendung der Dämpfungsmasse in einem Ultraschallsensor.

Nach einer vorteilhaften Ausführungsform hat das bis zum einer Temperatur von 150°C oder höher stabile Epoxidharz eine niedrige Glasübergangstemperatur unter Raumtemperatur, insbesondere unter 0°C, bevorzugt unter (minus)-10°C, bevorzugt unter (minus)-20°C und insbesondere bevorzugt bei (minus)-35°C.

Es wurde herausgefunden, dass Epoxidharze mit sauren, also entweder Lewis-sauren oder Bronstedt-sauren, funktionellen Gruppen, insbesondere mit sauren Estergruppen eine höhere Glasübergangstemperatur haben.

Als "saure Ester", die Bestandteil eines Epoxidharzgemisches sind, werden Halbester bezeichnet, die beide Funktionalitäten, also Ester und Carbonsäure, an einem Molekül haben. Diese Komponenten werden beispielsweise durch eine Vorreaktion erzeugt und dienen -wiederum beispielsweise - im System Epoxid plus Anhydrid als reaktive Flexibilisierungskomponente. Damit kann man beispielsweise eine langkettige und flexible Dicarbonsäure erzeugen, die als Härterkomponente dient.

Nach einer vorteilhaften Ausführungsform umfasst das Epoxidharz eine Komponente mit einem "sauren Ester" als flexibilisierende Komponente. Besonders bevorzugt ist dabei, dass die flexibilisierende Komponente bei einem zwei-komponentigen Epoxidharz sowohl in der A-Komponente, also beispielsweise in der Epoxidkomponente, als auch in der B-Komponente, also beispielsweise in der Anhydrid-Komponente, vorhanden ist.

Bei dem Vorhandensein von "sauren Estern" bei zwei Komponenten in einem Epoxidharz resultiert bevorzugt nach Aushärtung der Mischung von A und B ein Formstoff, der gummielastisch ist. Beispielsweise haben diese Epoxidharze auch einen breiten Temperaturbereich von beispielsweise 100 °C oder mehr, wie am Beispiel Epoxonic 251 gezeigt, also von -40°C bis 150°C, mit mechanischer Dämpfung.

Daraus resultiert nach Aushärtung der Mischung von A und B.

Es eignen sich alle ungefüllten flexiblen, bis hochflexiblen spannungsarme Epoxidharze, die niederviskos sind. Beispielsweise wird eine Viskosität des Epoxidharzes bei 25 °C von ca. 4000 bis 9000 mPas, insbesondere von 5000 bis 8500 mPas und insbesondere bevorzugt ein Epoxidharz mit einer Viskosität von 7000 +/- 1500 mPas eingesetzt.

Das Harz hat bevorzugt eine Dauertemperaturbeständigkeit bei 120°C bis 190°C, bevorzugt bei 140°C bis 180°C und insbesondere bei 150°C.

Die Härte des eingesetzten Epoxidharzes sollte bei 25°C zwischen 20 bis 70 Shore A liegen, bevorzugt zwischen 30 und 50 Shore A und insbesondere zwischen 35 bis 45 Shore A liegen.

Ganz generell wird eine hohe Dichte des Harzes angestrebt, weil eine Rückseitenbedämpfung erzielt wird. Dies insbesondere, weil gemäß der Erfindung Signale vermieden werden sollen, die von der Ultraschallquelle (in der Regel eine Keramik mit hoher Dichte) in die unerwünschte Richtung ausgestrahlt werden, dann reflektiert werden und anschließend in die erwünschte Richtung laufen und damit das eigentliche Meßsignal stören.

Die Dichte des ungefüllten Epoxidharzes sollte bei ca. 0,8 bis 1,8 g/cm³ liegen, bevorzugt bei 1,0 bis 1,5 g/cm³ und insbesondere bevorzugt bei 1,1g/cm³. Die Dichte des Epoxidharzes wird mit dem Füllstoff angepasst, so dass die erwünschte Dämpfung erzielt wird. Die Dichte der Dämpfungsmasse also des gefüllten Epoxidharzes liegt bei 1,5 bis 4 g/cm³, bevorzugt bei 2,0 bis 3,0 g/cm³ und insbesondere bei 2,5g/cm³, so dass die Dichte des Dämpfungsmaterials optimal an die Dichte der Ultraschallquelle angepasst ist.

Die Härtung sollte ungefähr nach 1 Stunde bei 150°C erfolgt sein. Die Härtung des Epoxidharzes erfolgt erst nach der Füllung des Harzes, so dass während der Härtung die Sedimentation des Füllstoffes erfolgt und der gewünschte Dichtegradient innerhalb der Harzmatrix erzeugt wird.

Das Epoxidharz hat bevorzugt einen Masseverlust von weniger als 15% nach 1500H bei 150°C, bevorzugt weniger als 12% und insbesondere bevorzugt weniger als 10%.

Nach einer bevorzugten Ausführungsform hat das Epoxidharz eine Reißdehnung bei 25°C im Bereich von 80 bis 120 %, bevorzugt von 90 bis 110% und insbesondere bevorzugt von ca. 100%.

Insbesondere vorteilhaft hat sich der Einsatz eines handelsüblichen Epoxidharzes, das unter dem Namen Epoxonic® 251 erhältlich ist, gezeigt.

Bei Mischungen aus Glysidylethern und cycloaliphatichen Epoxiden gibt es Hinweise auf mögliche Kanzerogenität, deshalb werden deratige Mischungen nicht bevorzugt.

Als Füllstoff wird bevorzugt ein Oxid eingesetzt, insbesondere bevorzugt ein Aluminiumoxid oder ein Titanoxid. Insbesondere hat sich gekörnter Füllstoff bewährt, um die Dichte der Dämpfungsmasse zu erhöhen.

Die Korngrößenverteilung ist beliebig, wobei nach einer vorteilhaften Ausführungsform die Korngrößenverteilung in der Größenordnung der Wellenlänge liegt, so dass zusätzlich zur Dämpfung auch Streuungen erreicht werden.

Im Folgenden wird die Erfindung noch anhand einiger Ausführungsbeispiele näher erläutert:

### Epoxidharzformulierung

| **EP 14** | Gramm | MT | 27,000 |
|---|---|---|---|
| Epoxonic 251 Part A | 15,517 | 17,241 | 17,24% |
| Epoxonic 251 Part B | 11,483 | 12,759 | 12,76% |
| Al₂O₃ F332 (80µm) | 63,000 | 70,00 | 70,00% |

| **2-Komponentig gleiche Volumenanteile Füllstoff** | | | |
|---|---|---|---|
| **EP 25 A1** | Gramm | MT | 100 |
| Epoxonic 251 Part A | 17,241 | 17,241 | 30,00% |
| Al₂O₃ F320 (392 µm) | 13,410 | 13, 410 | 23,33% |
| Al₂O₃ F332 (80µm) | 13,410 | 13,410 | 23,33% |
| Al₂O₃ F316 (2, 6µm) | 13,410 | 13,41 | 23,33% |
| | 57,471 | 57,47 | 100,00% |

| **EP 25 B1** | | | |
|---|---|---|---|
| Epoxonic 251 Part B | 12,759 | 12,759 | 30,00% |
| Al₂O₃ F320 (392 µm) | 9,923 | 9, 923 | 23,33% |
| Al₂O₃ F332 (80µm) | 9, 923 | 9, 923 | 23,33% |
| Al₂O₃ F316 (2,6µm) | 9,923 | 9, 92 | 23,33% |
| | 42,529 | 42,53 | 100,00% |

Zu dem Epoxidharz wird gekörntes Aluminiumoxid als Füllstoff zugegeben, um die Dichte der Dämpfungsmasse zu erhöhen. Die Füllstoffpartikel besitzen eine Korngrößenverteilung die eine Sedimentation der Partikel in der Harzmatrix während der Aushärtung gewährleistet. Hierzu werden auch Mischungen verschiedener Korngrößenverteilungen verwendet.

Die Zugabe von Silikonelastomerpartikel ist nicht erforderlich, da das Reaktionsharz gemäß der Erfindung nur bei tiefer Temperatur spröde wird, ansonsten gummielastisch ist und daher keine zusätzliche Schlagzähmodifizierung benötigt.

Die einzige Figur zeigt schematisch den Aufbau des Ultraschallsensors.

Zu erkennen ist ein Tauchrohr 1, das beispielsweise aus Stahl ist. Dieses Tauchrohr 1 taucht, wie der Name schon sagt, in die zu messende Flüssigkeit, also beispielsweise das Öl ein. Die gewellte Linie 2 zeigt dabei den Ölstand. Das Tauchrohr 1 hat als Referenzsignal für die Signallaufzeit zwei auf gleicher Höhe des Tauchrohrs 1 liegende Einkerbungen 3. Das Tauchrohr 1 setzt auf einem Kunststoffgehäuse 4 auf, das beispielsweise aus PA 66, GF30, PA 6, PBT, PET, PPS, PSU und PES, beispielsweise mit 30% Glasfasern, ist.

In dem Gehäuse 4 mittig angeordnet befindet sich ein Träger 7, auf dem die Dämpfungsmasse 6 gemäß der Erfindung liegt. Auf der Dämpfungsmasse 6 ist der Ultraschallsender 5, der das Signal, über dessen Laufzeit die Höhe des Füllstands 2 berechnet werden kann, gemessen wird.

Zur Erzielung der gewünschten Dämpfung wird das Ultraschallsignal zunächst eingekoppelt. Das gelingt durch die Wahl des Füllstoffes, der zum einen die Dichte auf Werte von 1,5 bis 4 g/cm³ erhöht und gleichzeitig bei der Sedimentation einen Dichtegradienten über die Füllhöhe erzeugt. Mit einer Korngrößenverteilung die in der Größenordnung der Wellenlänge liegt, können zusätzlich zur mechanischen Dämpfung auch Streuungen erreicht werden.

Durch das Merkmal einer mechanischen Dämpfung, die sich über den gesamten Temperaturbereich erstreckt, kann das Problem der temperaturabhängigen Dämpfung gelöst werden.

Durch die Erfindung wird erstmals eine Dämpfungsmasse angegeben, die eine Temperaturstabilität bei den im Motor vorherrschenden Temperaturen sowie die über den gesamten Temperaturbereich erforderliche Weichheit und Stabilität, also Dämpfungsfähigkeit, zeigt. Erstmals ist eine Dämpfungsmasse mit einem derartig breiten Temperaturintervall verfügbar, die einen Dauereinsatz bei Temperaturen von ungefähr 150°C erlaubt und gleichzeitig eine sehr gute Ultraschalldämpfung bei tiefen Temperaturen besitzt.

## Patentansprüche

1. Dämpfungsmasse, die in einem Temperaturintervall von - 30°C bis 150°C weich und stabil ist, umfassend ein Epoxidharz und einen Füllstoff, wobei der Füllstoff in einer multimodalen Korngrößenverteilung vorliegt, so dass ein Dichtegradient der Partikel in der Harzmatrix vorliegt.

2. Dämpfungsmasse nach Anspruch, 1, wobei das Epoxidharz eine Glasübergangstemperatur unter 0°C hat.

3. Dämpfungsmasse nach einem der vorstehenden Ansprüche, die eine Viskosität des Epoxidharzes bei 25 °C von ca. 4000 bis 9000 mPa·s hat.

4. Dämpfungsmasse nach einem der vorstehenden Ansprüche, wobei die Dichte der Dämpfungsmasse durch den Füllstoff auf 1,5 bis 4 g/cm³ erhöht ist.

5. Dämpfungsmasse nach einem der vorstehenden Ansprüche, wobei das Epoxidharz saure funktionelle Gruppen hat.

6. Dämpfungsmasse nach einem der vorstehenden Ansprüche, wobei das Epoxidharz Estergruppen hat.

7. Verwendung der Dämpfungsmasse nach einem der Ansprüche 1 bis 6 in einem Ultraschallsensor.

## Claims

1. Damping composition which is stable and soft in a temperature range from -30°C to 150°C, comprising an epoxy resin and a filler, where the filler is present in a multimodal grain size distribution so that a density gradient of the particles is present in the resin matrix.

2. Damping composition according to Claim 1, where the glass transition temperature of the epoxy resin is below 0°C.

3. Damping composition according to any of the preceding claims, which has a viscosity of the epoxy resin of about 4000 to 9000 mPa·s at 25°C.

4. Damping composition according to any of the preceding claims, where the density of the damping composition has been increased to from 1.5 to 4 g/cm³ by virtue of the filler.

5. Damping composition according to any of the preceding claims, where the epoxy resin has acidic functional groups.

6. Damping composition according to any of the preceding claims, where the epoxy resin has ester groups.

7. Use of the damping composition according to any of Claims 1 to 6 in an ultrasound sensor.

## Revendications

1. Matière d'amortissement, qui est molle et stable dans un intervalle de température de 30°C à 150°C, comprenant une résine époxyde et une charge, la charge se présentant en une répartition granulométrique multimodale, de manière à avoir un gradient de masse volumique des particules dans la matrice de résine.

2. Matière d'amortissement suivant la revendication 1, dans laquelle la résine époxyde a un point de transition à l'état vitreux inférieur à 0°C.

3. Matière d'amortissement suivant l'une des revendications précédentes, qui a une viscosité de la résine époxyde à 25°C d'environ 4 000 à 9000 mPa·s.

4. Matière d'amortissement suivant l'une des revendications précédentes, dans laquelle la masse volumique de la matière d'amortissement est augmentée par la charge jusqu'à 1,5 à 4 g/cm³.

5. Matière d'amortissement suivant l'une des revendications précédentes, dans laquelle la résine époxyde a des groupes fonctionnels acides.

6. Matière d'amortissement suivant l'une des revendications précédentes, dans laquelle la résine époxyde a des groupes ester.

7. Utilisation de la matière d'amortissement suivant l'une des revendications 1 à 6 dans un détecteur d'ultrasons.
